# EUROPEAN PATENT APPLICATION

(11) **EP 4 671 045 A1**
(43) Date of publication of application: **31.12.2025**
(21) Application number: 25382459.3
(22) Date of filing: 06.05.2025
(51) Int. Cl.: B60Q 1/52, B60Q 1/26

(54) **INTEGRATED EMERGENCY LIGHT UNIT FOR MOTOR VEHICLES**

(30) Priority: 07.05.2024 ES 202430841 U
(71) Applicant: Vázquez Santano, Francisco, 28901 Getafe Madrid (ES); López Casero González, Esther, 28901 Getafe Madrid (ES)
(72) Inventor: Vázquez Santano, Francisco, 28901 Getafe Madrid (ES); López Casero González, Esther, 28901 Getafe Madrid (ES)
(74) Representative: Espiell Gomez, Ignacio

(57) **Abstract**

Integrated emergency light system for motor vehicles, suitable for incorporation into a motor vehicle (1), comprising an emergency light (2) intended as a safety device for signalling an emergency situation on the road involving the motor vehicle (1); movable support means (3) on which said light (2) is installed so as to be deployable, either on the roof or at another point of the vehicle; and activation means for the driver or user, either by pressing a button (5) or another actuating means, or by voice commands, linked to said movable support means (3), in such a way that, when the activation means are engaged, the light (2) is deployed from a rest position, where the light is integrated in the bodywork (4), to a deployed operating position, where the light is above the bodywork (4) and the emergency light (2) begins to operate. In one embodiment of the invention, upon rollover, collision or major impact of the motor vehicle (1), the emergency light (2) is automatically deployed and activated. In one embodiment of the invention, the system comprises geolocation and connectivity means to remotely indicate the position of the vehicle to an authority, operator, or emergency service when the emergency light (2) is activated.

## Description

### OBJECT OF THE INVENTION

The invention, as stated in the introduction of the present specification, relates to an integrated emergency light unit for motor vehicles that provides advantages and features, which are described in detail below, constituting an improvement over the current state of the art.

The purpose of the present invention lies in a device comprising an emergency light, intended as a safety element for signalling an emergency situation on the road involving a motor vehicle, such as a V16 emergency light-without excluding other analogous types that may exist now or in the future-which presents the advantage of being designed for integrated installation, preferably in a retractable manner, within the motor vehicle itself as part of a set of elements allowing its deployment and activation by means of activation controls operated by the driver or user, for example by pressing a button or through voice commands, linked to said mobile support mechanisms. Optionally, provision is made for the deployment and activation of the emergency light to also be automatic in the event of a rollover, collision, or significant impact.

### SCOPE OF APPLICATION OF THE INVENTION

The field of application of the present invention falls within the sector of the industry dedicated to the manufacture of automotive accessories, focusing particularly on the area of active safety systems, and more specifically on emergency lights, such as V16 lights.

### BACKGROUND OF THE INVENTION

As is well known, the emergency light, such as a V16-type emergency light, is a luminous device used in motor vehicles, typically private motor vehicles, to signal a roadside emergency. It is a safety device that is particularly necessary in situations of low visibility, such as at night or in adverse weather conditions.

The V16 emergency light emits intermittent flashes in a specific pattern, which helps to alert other drivers to the presence of a stationary motor vehicle in an emergency situation. This type of emergency light is usually amber or orange in colour to enhance its visibility. In addition, it generally includes geolocation and connectivity features to remotely indicate the position of the motor vehicle to an authority, operator or emergency service.

Although the widespread use of emergency lights is not yet mandatory at European level, their use is already permitted in many countries, and it is expected that they will gradually replace warning triangles. In any case, under Spanish legislation, the emergency triangles currently used in these situations will disappear from roads from 2026, and in their place, it will be mandatory to use the V16 emergency light, as it offers several advantages, the most notable of which is that there is no need to leave the motor vehicle and walk on the road to place the triangles.

However, the use of this emergency light has certain drawbacks. The main drawback is that, typically, the emergency light is an accessory kept in the glove compartment or another compartment of the motor vehicle and, in the event of an emergency, it must be located, removed, activated, and fixed to the exterior of the motor vehicle, usually in the highest position, such as the roof, so that it is clearly visible. All these operations, if it is merely a breakdown stop of the motor vehicle, can be easily carried out by the driver. However, in the event of an accident or incident, it is often the case that neither the driver nor any of the other occupants of the motor vehicle are in a position to locate, remove, activate, and secure the emergency light at a visible point on the exterior of the motor vehicle.

The objective of the present invention is the development of an emergency light that can be integrated into the motor vehicle itself and can be deployed and activated by means of activation mechanisms operated by the driver or user, for example, by pressing a button or via voice commands.

Furthermore, another objective of the invention is the development of a device that prevents the emergency light, when not in use, from being exposed and instead keeps it concealed and retracted within the bodywork of the motor vehicle, so that it does not constitute an inconvenience or a protruding element that could be damaged or cause confusion. Its use is intended for any motor vehicle in the event of an emergency, accident, incident or breakdown, especially private and commercial motor vehicles, etc., and not for special vehicles or those belonging to security forces.

Furthermore, an additional objective of the invention is to provide equipment in which the emergency light, when concealed and retracted, is deployed to its operational position and activated fully automatically in the event of an accident or incident in which the motor vehicle rolls over or receives an impact, given that in such circumstances the user may be unable to activate it manually, for example by pressing a button or issuing voice commands.

Furthermore, with reference to the current state of the art, it should be noted that, although various types and models of emergency lights for motor vehicles are known, at least to the applicant, there is no known integrated emergency light device, nor any other invention of similar application, that presents technical and structural characteristics identical or similar to those claimed herein.

### EXPLANATION OF THE INVENTION

The integrated emergency lighting equipment for motor vehicles proposed in the invention is configured as an optimum solution for achieving the objectives indicated above and, at the same time, as an improvement on the current state of the art, the characterising details which make it possible and which distinguish it being conveniently set out in the final claims accompanying the present description.

Specifically, as previously indicated, the invention proposes a device which, intended for incorporation into a motor vehicle, in addition to the emergency light itself-whether of the V16 type or similar, designed as a safety element to signal an emergency situation on the road -comprises means for its integrated installation, preferably in a retractable and concealed manner, within the bodywork of the motor vehicle, either on the roof or another point of the motor vehicle. It also includes means of activation by the user, for example by pressing a button or using voice commands, and optionally by automatic means, which allow it to be deployed from a resting position, preferably concealed, to a deployed position for use, with simultaneous activation so that the emergency light immediately begins to operate.

Thus, in the event that the motor vehicle becomes immobilised on the carriageway or its load has fallen onto it, the driver or user will be able to activate the emergency light using activation means, for example, preferably by pressing a button on the motor vehicle or by means of a voice command, which will operate the emergency light by releasing it from inside the motor vehicle, as it will be integrated into the vehicle bodywork, preferably in a concealed manner. And, immediately, the emergency light alerts other motor vehicle drivers to the proximity of an imminent hazard, as well as notifying an authority, manager or emergency service.

To this end, in a preferred embodiment of the invention, the housing of the emergency light is incorporated coupled to a movable support, for example by means of a rotary mechanism or a lifting and lowering mechanism, associated with a cover that sits flush with the vehicle bodywork and opens synchronously with the movement of the support to move the emergency light from a concealed position in a housing provided beneath said cover to a deployed operational position above it. This electrically operated support is connected to the button or actuation means via an electronic board with a microcontroller responsible for controlling its operation, as well as to a power supply, for example, the vehicle's own battery or that of the device.

Furthermore, in one embodiment, the system also comprises a sensor linked to the movable support of the emergency light in such a way that, in the event of a rollover, collision, or severe impact involving the motor vehicle-situations in which it is highly likely that the driver would be unable to manually trigger the deployment of the emergency light -the sensor is responsible for sending a signal to the microcontroller so that the deployment and activation of the emergency light take place automatically, without the need to press the button or activation means.

Furthermore, preferably, the system is equipped with means to prevent it from being operated manually if the motor vehicle is not immobilised.

Furthermore, preferably, the connectivity of the emergency light's geolocation module communicates the activation and deactivation of the device, as well as its geopositioning, to the relevant authority or management body, for example to an emergency service, every 100 seconds in the case of manual activation and more frequently, for instance every 15 or 10 seconds, in the case of automatic activation (as it is understood that this would relate to a more critical emergency situation).

### DESCRIPTION OF THE DRAWINGS

To complement the description being provided and in order to facilitate a better understanding of the features of the invention, a drawing is included with this descriptive report, as an integral part thereof, which, for illustrative and non-limiting purposes, represents the following:

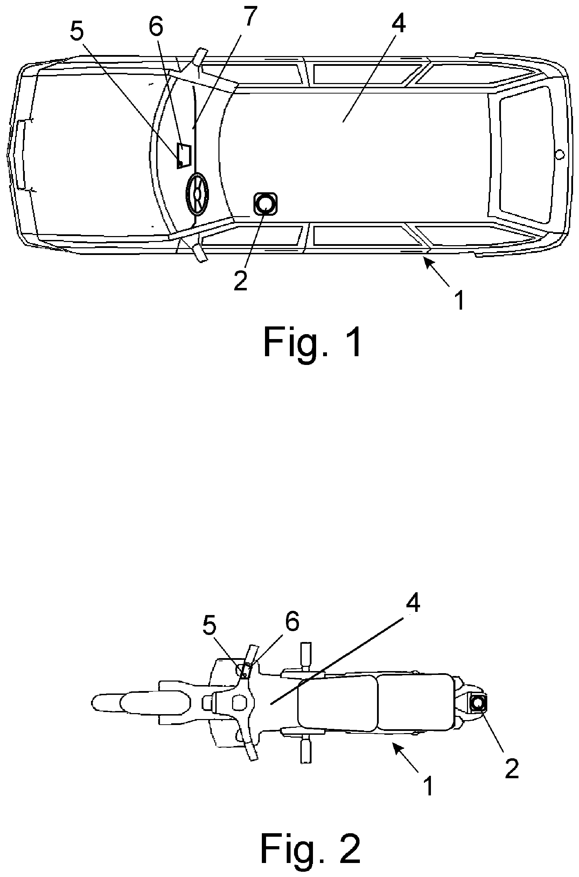

Figure 1 shows a schematic top plan view of a motor vehicle, specifically a car, featuring an example of the integrated emergency light system for motor vehicles which is the subject of the invention, depicted with the emergency light in its operational position, allowing the arrangement of its main components to be observed.
Figure 2 shows a schematic top plan view of another motor vehicle, in this case a motorcycle, with an example of the integrated emergency light system subject of the invention;
Figure 3-A shows a schematic sectional view of a first embodiment of the retractable system comprising the integrated emergency light equipment that is the subject of the invention, specifically a system with a rotary mechanism for deploying the emergency light, shown in the concealed or rest position.
Figures 3-B and 3-C show sectional views of the example of the system shown in Figure 3-A, shown, respectively, in the deployment phase and once positioned in its fully deployed or operational position.
Figure 4-A shows a schematic sectional view of a second embodiment of the retractable system comprising the integrated emergency light system according to the invention, in this case with a lifting and lowering mechanism for deploying the emergency light, shown in its concealed or rest position; and
Figures 4-B and 4-C show sectional views of the example of the system shown in Figure 4-A, shown, respectively, in the deployment phase and once positioned in its fully deployed or operational position.

### PREFERRED VERSION OF THE INVENTION

In view of the aforementioned figures, and in accordance with the numbering adopted, two non-limiting exemplary embodiments of the integrated emergency light unit for motor vehicles according to the invention can be observed, which comprises the components described in detail below.

Thus, as can be seen in said figures, the apparatus of the invention, intended for incorporation into a motor vehicle (1), such as a car, motorcycle, lorry, coach, etc., in addition to an emergency light (2), such as a V16-type emergency light or similar, that is, one intended as a safety device to signal an emergency situation on the road involving the motor vehicle (1), comprises at least:
- mobile support means (3) in which said emergency light (2) is installed in a deployable manner and integrated into the bodywork (4) of the motor vehicle, either on the roof or at another point of the motor vehicle, and
- activation means operated by the driver or user, either by pressing a button (5) or another means of actuation, or by means of voice commands, linked to said mobile support means (3),

Thus, when the activation means are operated, the emergency light (2) deploys from a resting position integrated in the bodywork (4) to a deployed position of use where it is situated above the bodywork (4), and the emergency light (2) begins to operate.

Preferably, the mobile support means (3) incorporating the emergency light (2) are configured so that, in the resting position, the entire assembly remains completely concealed beneath the bodywork (4).

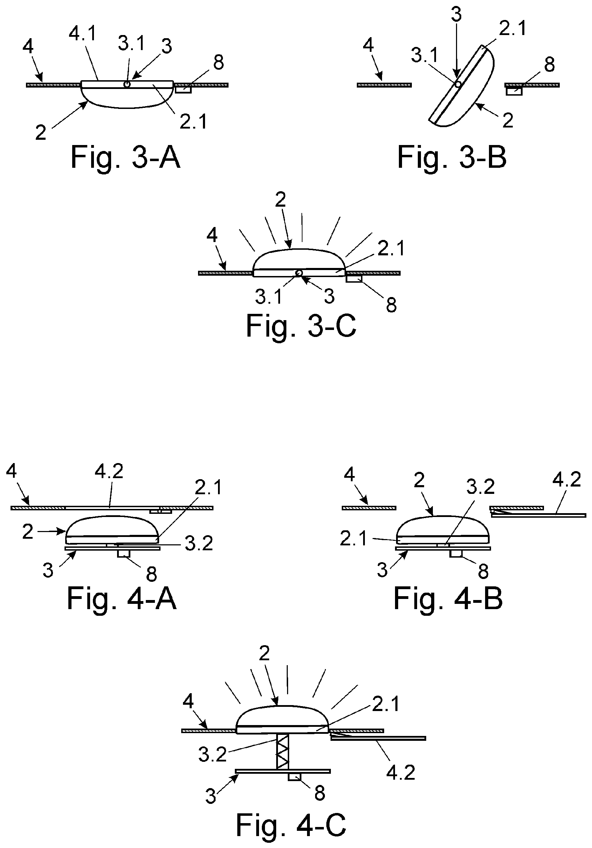

As shown in figures 3-A, 3-B, and 3-C, in one embodiment, the mobile support means (3) comprise a rotary mechanism (3.1) which, in a preferred embodiment, is directly associated with the housing (2.1) of the emergency light (2), such that the underside of said housing (2.1) defines a rotary cover (4.1) that opens in the bodywork (4), which, when the button (5) or a similar activation means is operated, rotates together with the emergency light (2) from the concealed position to the deployed position for use.

Furthermore, with reference to Figures 4-A, 4-B and 4-C, it can be seen that, in another embodiment, the mobile support means (3) comprise a lifting and lowering mechanism (3.2) which is preferably associated with the housing (2.1) of the emergency light (2), and in this case a sliding cover (4.2) is provided in the bodywork (4), which, when the button (5) or a similar activation means is operated, moves in synchrony with the lifting and lowering mechanism (3.2) from a closed position to an open position.

In any case, preferably, the mobile support means (3) are electrically operated by a motor (not shown) and are connected to a power source, which may be located within the device itself or may be the vehicle's own battery , and to the button (5) or other activation means via an electronic board with a microcontroller (not shown), which is responsible for controlling its synchronised operation with the activation of the emergency light (2) and, where applicable, with the opening of the bodywork cover (4).

Furthermore, in a preferred embodiment, the system also comprises a sensor (8), schematically depicted in figures 3-A to 4-C, which is connected to the movable support means (3) of the emergency light (2) so that, in the event that the driver or user is unable to activate the emergency light (2) manually, for example as a result of a rollover, collision or major impact involving the motor vehicle (1), it sends a signal to the microcontroller so that deployment and activation of the emergency light (2) occur automatically. It should be noted that said sensor (8) may be integrated into the emergency light (2) itself or at another point of the bodywork (4).

Furthermore, preferably, the button (5) or means of activation should not be able to be operated unless the motor vehicle is immobilised.

Furthermore, preferably, the connectivity of the geolocation module of the emergency light (2) communicates the activation and deactivation of the device, as well as its geolocation, to the relevant authority or management entity.

Having sufficiently described the nature of the present invention, as well as the manner of putting it into practice, it is not considered necessary to make its explanation more extensive for any expert in the field to understand its scope and the advantages derived from it.

## Claims

1. Integrated emergency light unit for motor vehicles which, being suitable for incorporation into a motor vehicle (1), and comprising an emergency light (2), that is, one intended as a safety device to signal an emergency situation on the road involving the motor vehicle (1), is **characterised in that** it also comprises:
- mobile support means (3) on which said emergency light (2) is installed in a deployable manner and integrated into the bodywork (4) of the motor vehicle (1), either on the roof or at another point of the motor vehicle (1), and
- activation means operated by the driver or user, either by pressing a button (5) or another means of actuation, or by means of voice commands, linked to said mobile support means (3),
in such a way that, when the activation means are operated, the emergency light (2) is deployed from a rest position integrated within the bodywork (4) to a deployed operating position, where it is positioned above the bodywork (4) and the emergency light (2) begins to operate.

2. Integrated emergency light system for motor vehicles, according to claim 1, **characterised in that** the mobile support means (3) with the emergency light (2) are configured so that, in the rest position, the entire assembly is completely concealed beneath the bodywork (4).

3. Integrated emergency light unit for motor vehicles, according to claim 2, **characterised in that** the mobile support means (3) comprise a rotation mechanism (3.1).

4. Integrated emergency light system for motor vehicles, according to claim 3, **characterised in that** the rotary mechanism (3.1) is directly associated with a housing (2.1) of the emergency light (2), such that the lower surface of said housing (2.1) itself forms a rotary cover (4.1) in the bodywork (4) which, when the button (5) or activation means is operated, rotates together with the emergency light (2) from the concealed position to the deployed operating position.

5. Integrated emergency light unit for motor vehicles, according to claim 2, **characterised in that** the mobile support means (3) comprise a lifting and lowering mechanism (3.2).

6. Integrated emergency light system for motor vehicles, according to claim 5, **characterised in that** the lifting and lowering mechanism (3.2) is associated with a housing (2.1) of the emergency light (2), with a sliding cover (4.2) provided in the bodywork (4) which, when the button (5) or means of activation is operated, moves synchronously with said lifting and lowering mechanism (3.2) from a closed position to an open position.

7. Integrated emergency light system for motor vehicles, according to any of the preceding claims, **characterised in that** the mobile support means (3) are electrically operated by a motor.

8. Integrated emergency light system for motor vehicles, according to any of the preceding claims, **characterised in that** the mobile support means (3) are connected to a power supply and to the button (5) or actuation means via an electronic board with a microcontroller which controls their synchronised operation with the activation of the emergency light (2) and, where applicable, the opening of the bodywork cover (4).

9. Integrated emergency light system for motor vehicles, according to any of the preceding claims, **characterised in that** it further comprises a sensor (8) connected to the movable support means (3) of the emergency light (2) so that, in the event that the driver or user is unable to activate the emergency light (2) manually due to a rollover, collision or major impact involving the motor vehicle (1), the deployment and activation of the emergency light (2) takes place automatically.

10. Integrated emergency light system for motor vehicles, according to any of the preceding claims, **characterised in that** it comprises geolocation and connectivity means to remotely indicate the position of the motor vehicle to an organisation, authority, or emergency service when the emergency light (2) is activated.
